Europäisches Patentamt

European Patent Office

Office européen des brevets

(11) Veröffentlichungsnummer: **0 160 995 B1**

(12) **EUROPÄISCHE PATENTSCHRIFT**

(45) Veröffentlichungstag der Patentschrift:
26.08.87

(21) Anmeldenummer: 85105692.9

(22) Anmeldetag: **10.05.85**

(51) Int. Cl.⁴: **B 23 H 7/04,** B 23 H 1/02

(54) Schaltungsanordnung zur Erzeugung von Erodierimpulsen an einer Funkenerosionsanlage.

(30) Priorität: **11.05.84 CH 2353/84**
**15.06.84 DE 3422399**

(43) Veröffentlichungstag der Anmeldung:
**13.11.85 Patentblatt 85/46**

(45) Bekanntmachung des Hinweises auf die Patenterteilung:
**26.08.87 Patentblatt 87/35**

(84) Benannte Vertragsstaaten:
**CH DE FR GB IT LI LU SE**

(56) Entgegenhaltungen:
**DE - A - 2 826 488**
**DE - A - 2 908 696**

(73) Patentinhaber: **AG für Industrielle Elektronik AGIE Losone bei Locarno, CH-6616 Losone/Locarno (CH)**

(72) Erfinder: **Dresti, Silvano, Via Curioni 3, I-28052 Cannobio (IT)**
Erfinder: **Bühler, Ernst, Salita degli Orti 5, CH-6616 Losone (CH)**
Erfinder: **Derighetti, René, Via Reslina 34, CH-6616 Losone (CH)**

(74) Vertreter: **EGLI-EUROPEAN PATENT ATTORNEYS, Widenmayerstrasse 5, D-8000 München 22 (DE)**

ACTORUM AG

**Beschreibung**

Die Erfindung bezieht sich auf eine Schaltungsanordnung zur Erzeugung von Erodierimpulsen an einer Funkenerosionsanlage aus einer Gleichstromquelle ohne zugeschaltete Ballastwiderstände mit mindestens zwei zur Funkenstrecke und zueinander parallel angeordneten Stromkreisen, wobei jeder Stromkreis in Reihe aufweist:

einen mit der einen Klemme der Gleichstromquelle verbundenen ersten Schalter,

eine Primärwicklung eines Transformators und einen mit der anderen Klemme der Gleichstromquelle ohne Zuschaltung eines diskreten Energiespeichers verbundenen zweiten Schalter und

einer zur Erzeugung und einstellbaren und/oder steuerbaren zeitlichen Zuordnung von Steuersignalen ausgelegten Steuereinrichtung, deren Steuerausgänge mit den ersten und zweiten Schaltern verbunden sind.

Für die Wirtschaftlichkeit des funkenerosiven Prozesses spielt die Effektivität der Entladungen im Bearbeitungsspalt und damit die Auslegung des Funkengenerators eine entscheidende Rolle. So wurden früher Impulsgeneratoren eingesetzt, die eine Strombegrenzung mit Hilfe von Ballastwiderständen vorsahen, um dadurch die Stromquelle vor übermässiger Strombelastung zu schützen, wenn die Entladestrecke gezündet ist. Ausserdem sollte der Ballastwiderstand dem Schutz von Halbleiter-Schaltern dienen. Ballastwiderstände stehen jedoch einer an sich wünschenswerten Leistungserhöhung für den Generator hindernd entgegen.

Dieser Nachteil wird durch die DE-A-2 908 696 behoben. Aus ihr ist ein Funkenerosionsgenerator ohne Ballastwiderstände bekannt, bei dem die positiven hochfrequenten Halbwellen der Generatorschaltung in taktweiser Unterbrechung der Funkenstrecke zugeführt werden. Diese Massnahme führt jedoch zu unerwünscht stark welligen Entladeimpulsen mit kurzen Unterbrechungen der Stromzuführung. Dabei dürfen die Unterbrechungen nur so kurz sein, dass alle Impulse in ein und demselben Entladekanal zur Entladung führen. Diese Bedingung beeinträchtigt die Flexibilität der Steuerung der Anlage und somit eine breite Variation der unterschiedlichen Prozessparameter ganz erheblich.

Die gattungsgemässe Schaltungsanordnung ist aus der DE-A-2 826 488 bekannt. Bei ihr ist zwischen dem ersten Schalter und der Primärwicklung ein Energiespeicher, beispielsweise in Form einer Spule vorgesehen. Der der Primärwicklung zugewandte Ausgang des Energiespeichers ist über einen dritten Schalter mit der anderen Klemme der Gleichstromquelle verbunden. Darüber hinaus sind pro Stromkreis insgesamt drei Freilaufdioden für die Energiespeicherspule und die Primärwicklung vorgesehen. Alle Primärwicklungen arbeiten auf einer gemeinsamen Sekundärwicklung. Jeder Stromkreis ist so ausgelegt, dass ein Stromimpuls zur Funkenstrecke nur dann durchgelassen wird, wenn die ersten und zweiten Schalter gleichzeitig geschlossen sind.

Die gattungsgemässe Schaltungsanordnung hat den Vorteil einer galvanischen Trennung zwischen Netz und Funkenstrecke. Sie gestattet auch eine grössere Flexibilität bei der Steuerung der Anlage als die aus der DE-A-2 908 696 bekannte Schaltungsanordnung.

Es ist Aufgabe der Erfindung, eine baulich möglichst einfache Schaltungsanordnung der gattungsgemässen Art zur Verfügung zu stellen.

Diese Aufgabe wird durch den im Patentanspruch 1 angegebenen Gegenstand gelöst.

Die erfindungsgemässe Schaltungsanordnung kommt ohne den in der DE-A-2 826 488 vorgesehenen Energiespeicher nebst zugeordneter Freilaufdiode und drittem Schalter aus. Sie ist daher erheblich einfacher aufgebaut. Gleichwohl können mit ihr grundsätzlich beliebig geformte Impulse ebenso wie mit der vorbekannten Schaltungsanordnung erzeugt werden. Gegenüber der bekannten Schaltungsanordnung hat sie ausserdem den Vorteil, dass bei ihrer Steuerung nicht auch noch das Strom-Spannungs-Verhalten und die Leistungsverluste im Energiespeicher, der Freilaufdiode und dem dritten Schalter berücksichtig werden müssen. Wegen der grossen Variationsbreite der Steuerungsmöglichkeit lässt sich auch die Restwelligkeit des Entladestromes frei einstellen und somit die Rauhigkeit der zu bearbeitenden Werkstückoberfläche variieren. Auch zeichnet sich die erfindungsgemässe Schaltungsanordnung durch einen erhöhten Generator-Wirkungsgrad aus.

Die Schaltungsanordnung nach Anspruch 2 hat den Vorteil, dass sie besonders steile Impulsflanken zulässt, da sie schaltungsmässig vom an sich bekannten «fly back» Schaltungsprinzip ausgeht.

Die Schaltungsanordnung nach Anspruch 3 dient einer weiteren Erhöhung der Steuerflexibilität.

Durch die Schaltungsanordnung nach Anspruch 4 können die Teilströme auf einfachste Weise unipolar gehalten werden.

Die Schaltungsanordnung gemäss Anspruch 5 ermöglicht wiederum mit einfachsten Mitteln eine Erhöhung der Steuerflexibilität.

Im folgenden werden bevorzugte Ausführungsbeispiele der Erfindung anhand schematischer Zeichnungen näher erläutert. Es zeigen:

Fig. 1 ein bevorzugtes Ausführungsbeispiel mit zwei steuerbaren Stromkreisen,

Fig. 2 ein Zeitdiagramm zur Darstellung der Stromüberlagerung beim Generator nach Fig. 1,

Fig. 3 das Ausführungsbeispiel einer Steuerschaltung zur Steuerung der beiden Stromkreise gemäss Fig. 1, nebst Wahrheitstabelle einiger Schaltungselemente,

Fig. 4a bis 4d verschiedene Zeitdiagramme zur Erläuterung der Arbeitsweise.

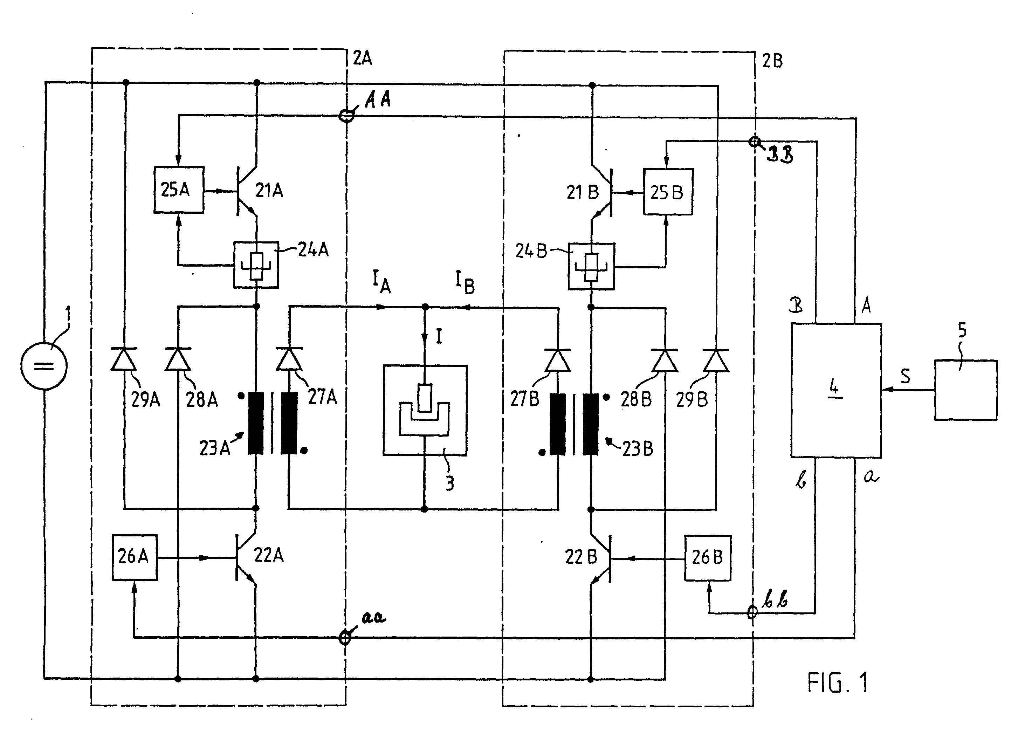

Das in Fig. 1 dargestellte Generatorschema zeigt eine Stromquelle 1, aus der eine Funkenstrecke 3 über zwei parallele verlustfreie Stromkreise 2A und 2B gespeist wird, so dass sich der Strom I durch die Funkenstrecke 3 aus der Summe der zugeführten Teilströme $I_A$ und $I_B$ ergibt. Das gezeigte Grundprinzip der Schaltung kann nach gleicher Art mehrfach vervielfacht angewendet werden. Zur Erzeugung von Schaltsignalen für die Schalter 21A, 22A, 21B, 22B der Schaltzweige 2A und 2B besteht eine Steuerschaltung 4, in der entsprechend dem Bedarf der Stromkreise 2A, 2B eine Logikschaltung zur Erzeugung von Steuersignalen A, a, B, b vorgesehen ist. Diese Steuerschaltung selbst wird von einem Taktgeber 5 über ein Taktsignal S angesteuert, wodurch wählbar vom Bedienungspersonal der Maschine, der Ein- und Ausschaltzyklus für die Generatorenimpulse vorgegeben werden kann.

Die Elemente des Stromkreises 2A sind durch den Index A, die des Stromkreises 2B durch den Index B gekennzeichnet. Im dargestellten Ausführungsbeispiel sind die Stromkreise 2A und 2B identisch aufgebaut. Bei der folgenden Beschreibung der Stromkreise 2A und 2B kann daher im wesentlichen auf die oben genannte Indexierung verzichtet werden.

Jeder Stromkreis 2 besitzt einen ersten und einen zweiten gesteuerten Schalter 21 und 22. In deren durchgeschaltetem Zustand fliesst ein Strom durch die Primärwicklung eines Impulstransformators 23. Die Stromstärke wird in einem Strommessglied 24 erfasst und in einer ersten Steuerstufe 25 auf einen dort eingestellten Sollwert abgeglichen. Hierzu wird das vom Strommessglied 24 kommende Istwertsignal mit einem in der Steuerstufe 25 gespeicherten vorgegebenen Sollwert verglichen. Sobald das Istwertsignal das Sollwertsignal erreicht hat, schaltet die Steuerstufe 25 den Schalter 21 in den nicht-leitenden Zustand.

Der Impulstransformator 23 wird unterhalb seiner Sättigung betrieben. Stromimpulse auf der Primärseite führen also zu Stromimpulsen bzw. Teilströmen $I_{A,B}$ auf der Sekundärseite, deren Stromstärke dem Übertragungsverhältnis entspricht. Die Teilströme $I_{A,B}$ werden mittels Dioden 27 unipolar gehalten.

Die Steuerung der vorzugsweise als Transistoren ausgebildeten Schalter 21 und 22 erfolgt aus der Steuerschaltung 4 mit Hilfe der den Schaltern 21 und 22 zugeordneten Logik- oder Steuersignale A, a bzw. B, b über die erste Steuerstufe 25 bzw. eine zweite Steuerstufe 26. Dabei ist noch anzumerken, dass die Schalter 21, 22 in den Stromkreisen 2 sperren, wenn das Steuersignal A, a, B, b auf logisch «O» steht, und durchschalten, wenn das genannte Steuersignal auf logisch «1» steht.

Nur wenn beide Schalter 21 und 22 gleichzeitig sperren, wird ein Stromimpuls zur Funkenstrecke 3 übertragen. Ist dagegen nur ein Schalter 21 oder 22 durchgeschaltet, dann befindet sich die Primärseite des Impulsübertragers 23 mittels Dioden 28 bzw. 29 jeweils in «Freilauf-Schaltung».

Hierzu befindet sich die Primärseite des Impulsübertragers 23 in Serie zwischen den beiden Schaltern 21 und 22. Ferner ist die Diode 29 parallel zu dem aus dem ersten Schalter 21 und der Primärseite bestehenden Schaltzweig und die Diode 28 parallel zu dem aus der Primärseite und dem zweiten Schalter 22 bestehenden Schaltzweig geschaltet.

Die sichere Zündung der Entladungen über die Funkenstrecke 3 wird aufgrund der durch die Impulsübertragung entstehenden hohen induzierten Spannungen bewirkt. Aus dem Schaltbild ist auch unmittelbar ersichtlich, dass die Funkenstrecke 3 galvanisch vollständig von der Generatorschaltung entkoppelt ist und daher auch in beliebiger Polarität betrieben werden kann.

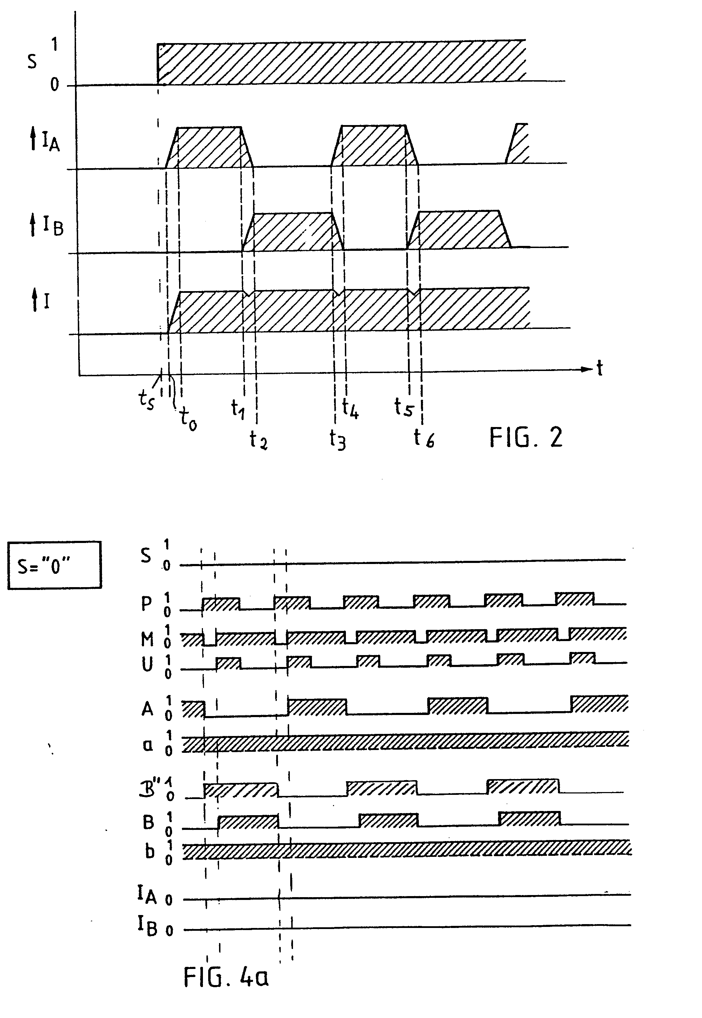

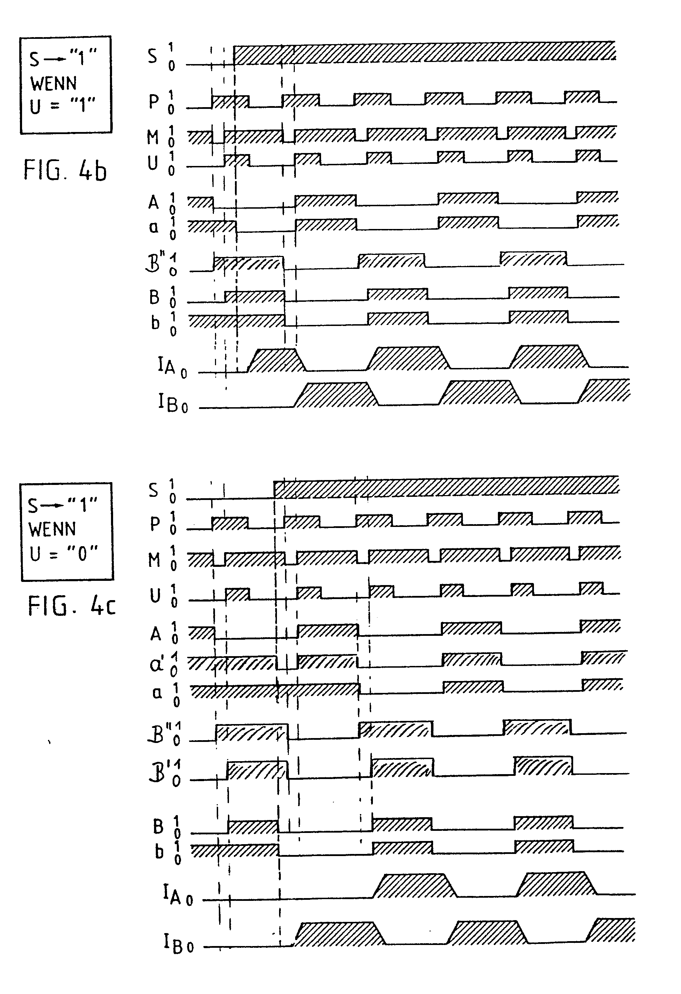

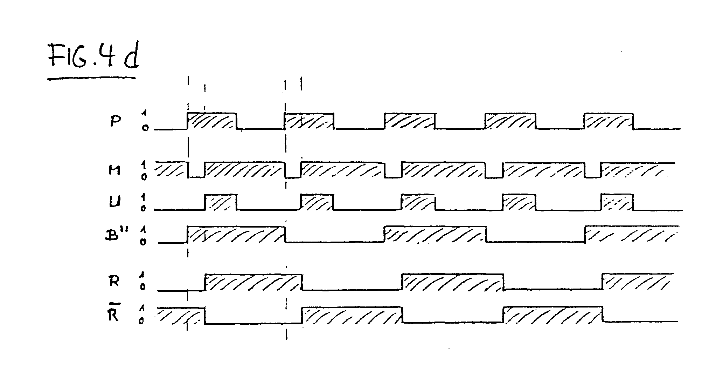

In Fig. 2 ist der sich aus der Überlagerung der beiden Teilströme $I_A$ und $I_B$ ergebende Gesamtstrom I bei entsprechender Ansteuerung der beiden Stromkreise 2A, 2B durch die Steuerschaltung 4 erläutert. Zum Zeitpunkt $t_s$ wird vom Operator-bedienten Taktgeber 5 das Taktsignal S eingeschaltet, so dass über den Transformator 23A ein impulsförmiger Teilstrom $I_A$ der Funkenstrecke 3 zugeführt wird. Dieser wird, wie später im einzelnen anhand der Steuerschaltung 4 (Fig. 4) erklärt, auf eine solche zeitliche Länge ($t_2$-$t_0$) eingestellt, die technisch und thermisch von den benutzten Bauelementen verkraftet werden kann. Die zeitliche Verzögerung von $t_0$ gegenüber $t_s$ ergibt sich bekanntlich aus der für Leistungsschaltkreise typischen Ansprechverzögerung. In zeitlicher Vorauseilung wird der zweite Stromkreis 2B angesteuert, so dass in ihm der Teilstrom $I_B$ zum Zeitpunkt $t_1$ zu fliessen beginnt. Auch er wird wiederum unter Beachtung seiner technisch/thermischen Belastbarkeit für eine Dauer ($t_4$-$t_1$) eingeschaltet belassen. Zum Zeitpunkt $t_3$ hat sich in zeitlicher Vorauseilung wiederum der erste Stromkreis 2A eingeschaltet und so fort. Aus der Summierung der Teilströme $I_A$ und $I_B$ ergibt sich der dritte gezeichnete Strom I, der so lange im Wechsel von den parallelen Stromkreisen 2A, 2B erzeugt wird, wie das Taktsignal S auf «Einschaltdauer» steht. Durch die Steuerung der Voreilung der Zündung des Folgeimpulses und der (gleichen) Pausen- und Impulsbreiten kann ein nahezu beliebig additiv geformter Stromimpuls von unendlicher Dauer gezündet werden. Die kürzest mögliche Stromdauer ist die Zeitdauer, die für die An- und Abstiegsflanken eines Stromflusses durch einen einzigen Stromkreis 2 erreicht werden kann. Dies ist mit derzeitigen handelsüblichen Bauelementen in der Grössenordnung von µs haltbar. Die in der Fig. 2 für den Strom I zwischen den Zeiten $t_1/t_2$; $t_3/t_4$; $t_5/t_6$ skizzierten leichten Einbrüche zeigen, dass es aus der Überlagerung der Impulse auch möglich ist, eine gezielte Formung der Entladestromimpulse zu erzeugen.

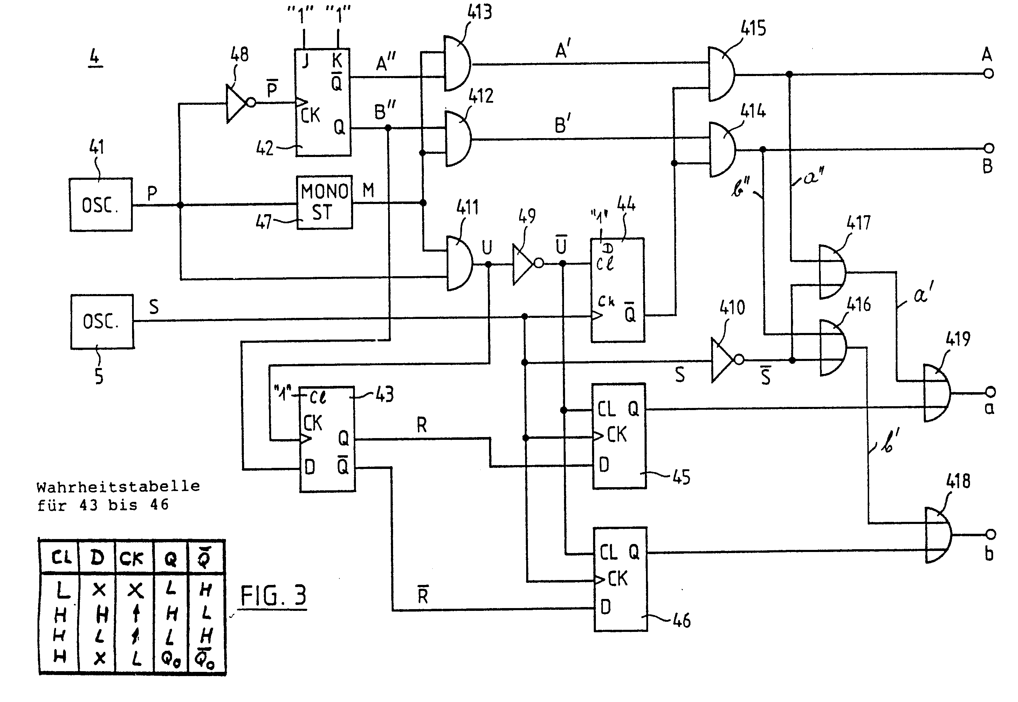

In Fig. 3 ist das Schaltungsschema für die Steuerschaltung 4 zur Erzeugung der über eine Schaltungslogik einander zugeordneten Steuersignale A, a, B, b dargestellt. Neben dem als Oszillator ausgebildeten Taktgeber 5, der über das Taktsignal S der Steuerschaltung 4 den vom Maschinenbediener gewünschten Bearbeitungstakt für die Entladeimpulse zuführt, besteht innerhalb der Steuerschaltung 4 ein weiterer Oszillator 41, der ein hochfrequentes Impulssignal P von bevorzugt rechteckförmigen Impulsen erzeugt. Zunächst wird dieses Impulssignal P nach Invertierung auf $\overline{P}$ durch den Inverter 48 dem Takt-Eingang CK eines JK-Flip-Flops 42 zugeführt. Dessen Eingänge J und K sind auf logisch «1» festgelegt. An den Ausgängen Q und $\overline{Q}$ dieses Master-Flip-Flops 42 werden die Signale A'' und B'' gewonnen, die jeweils über erste UND-Glieder 413 bzw. 412 in Signale A' und B' und dann jeweils über zweite UND-Glieder 415, 414 in die Signale A und B gewandelt werden. Die Gruppe der ersten UND-Glieder 412, 413 lässt die Signale A'', B'' nur passieren, wenn gleichzeitig ein ihnen zugeführtes Signal M auf logisch «1» steht. Das Signal M wird vom Ausgang eines monostabilen Bausteines 47 geliefert, dessen Steuereingang das Impulssignal P zugeführt wird. Der monostabile Baustein 47 kippt bei der positiven Flanke des Impulssignals P von seinem stabilen in seinen instabilen Zustand. Über den monostabilen Baustein 47 wird damit die Ungleichheit der Ausschaltintervalle zu den Einschaltintervallen erreicht, die in Fig. 2 bereits in Verbindung mit dem zeitlichen Vorlauf für die Zündung des Folgeimpulses angesprochen wurde.

Die Gruppe der zweiten UND-Glieder 414, 415 lässt die Signale A', B' nur passieren, wenn das Ausgangssignal am Ausgang $\overline{Q}$ eines D-FlipFlops 44 auf logisch « 1 » steht. Dem Takt-Eingang CK dieses Flip-Flops 44 wird das Taktsignal S, dem Clear-Eingang CL hingegen ein Signal $\overline{U}$ zugeführt. Das Signal $\overline{U}$ ist das Ausgangssignal eines Inverters 49, der eingangsseitig mit dem Ausgang eines UND-Gliedes 411 verbunden ist. Eingangsseitig wird das UND-Glied 411 mit dem Impulssignal P und dem Signal M beaufschlagt. Ausgangsseitig gibt es ein Signal U an den Inverter 49 ab. Der D-Eingang dieses Flip-Flops 44 wird dauernd auf logisch «1» gehalten. Die hier interessierenden möglichen Zustände dieses D-Flip-Flops 44 ergeben sich aus der ebenfalls in Fig. 3 gezeichneten Wahrheitstabelle. In der Wahrheitstabelle bedeuten:

CL: Clear-Eingang
D: D-Eingang
CK: Takt-Eingang
$\underline{Q}$: Q-Ausgang
$\overline{Q}$: $\overline{Q}$-Ausgang
L: logisch «0»
H: logisch «1»
$Q_0, \overline{Q}_0$: beliebig vorgebbare Pegel
X: beliebige Pegel
↑: ansteigende Flanke

Im übrigen wird die abfallende Flanke des Signals M benutzt, um den besprochenen zeitlichen Vorlauf der Zündung von Folgeimpulsen zu steuern.

Die Signale a und b werden von den Signalen A und B abgeleitet. Hierzu wird das Ausgangssignal A des UND-Gliedes 415 bzw. das Ausgangssignal B des UND-Gliedes 414 als Signal A'' bzw. B'' dem einen Eingang eines ersten ODER-Gliedes 417 bzw. 416 zugeführt. Die Signale a'' und b'' sind demnach mit den Signalen A und B identisch. Beiden ODER-Gliedern 416, 417 werden als Alternativ-Signal ein Signal $\overline{S}$ zugeführt. Dieses ist das von einem Inverter 410 invertierte Taktsignal S. Ausgangsseitig geben die ODER-Glieder 416, 417 die Signale a' und b' ab. Diese Signale stehen so lange auf logisch «1», wie das Taktsignal S auf logisch «0» steht. Ist hingegen das Taktsignal S logisch «1», dann stimmen die Signale a' und b' mit den Signalen a'' und b'' und damit mit den Signalen A und B überein.

Gesteuert durch den Master-Flip-Flop 42, können die Signale A und B stets nur alternierend anstehen, wobei die Zeitspanne zwischen der abfallenden Flanke des Signals A und der ansteigenden Flanke des Sigals B — und vice versa — gleich der Dauer ist, während welcher das Signal M auf logisch «0» steht. Für die Signale a und b muss zusätzlich noch darauf geachtet werden, dass sie nur dann auf logisch «0» stehen können, wenn das Signal S auf logisch «1» steht; ferner, dass bei der positiven Flanke des Taktsignals S eine Zwangssynchronisation zu den übrigen Signalen, insbesondere den Signalen M und U herbeigeführt wird.

Hierzu ist dem ODER-Glied 416 ein weiteres ODER-Glied 418 nachgeschaltet, dessen einer Eingang mit dem Signal b' beaufschlagt wird. Entsprechendes gilt für ein dem ODER-Glied 417 nachgeschaltetes ODER-Glied 419, dessen einer Eingang mit dem Signal a' beaufschlagt wird. Der Alternativ-Eingang des ODER-Gliedes 418 wird vom Q-Signal eines vorgeschalteten D-Flip-Flops 46 beaufschlagt; der Alternativ-Eingang des ODER-Gliedes 419 vom Q-Ausgang eines D-Flip-Flops 45. Die ODER-Glieder 418 und 419 geben die Signale a und b ab. Den beiden D-Flip-Flops 45 und 46 ist ein weiteres D-Flip-Flop 43 vorgelagert. Der Clear-Eingang CL des D-Flip-Flops 43 wird dauernd auf logisch «1» gehalten. Auch die D-Flip-Flops 43, 45 und 46 genügen der in Fig. 3 abgebildeten Wahrheitstabelle. Der Takteingang CK des Flip-Flops 43 wird mit dem Ausgangssignal U der UND-Stufe 411 beaufschlagt; der D-Eingang mit dem Ausgangssignal B'' des Master-Flip-Flops 42. Das vom Q-Ausgang des Flip-Flops 43 gelieferte Signal R wird dem D-Eingang des Flip-Flops 45 zugeführt. Das vom $\overline{Q}$-Ausgang des Flip-Flops 43 gelieferte Signal $\overline{R}$ wird dem D-Eingang des Flip-Flops 46 zugeführt. Die Takteingänge CK der Flip-Flops 45 und 46 werden gleichermassen vom Taktsignal S beaufschlagt; die Clear-Eingänge CL vom Ausgangssignal $\overline{U}$ des Inverters 49. Durch die Ansteuerung des D-Eingangs des Flip-Flops 43 mit dem Ausgangssignal B'' des Master-Flip-Flops 42 und des Takteinganges CK mit dem Ausgangssignal U des UND-Gliedes 411 wird erreicht, dass auch beim Wechsel des Taktsignals S von logisch «0» auf logisch «1» die gewünschte Zwangssynchronisation zwischen dem alternierenden Verlauf der Signale von A und B und den Signalen a und b erhalten bleibt. Im übrigen werden die Schaltsequenzen für die Signale A und B und a und b und die daraus resultierenden Teilströme $I_A$ und $I_B$ in Abhängigkeit von den verschiedenen Signalen innerhalb der Schaltung 4 in den Fig. 4a bis d noch einmal deutlicher gemacht.

In Fig. 4a wird der Fall angenommen, bei dem die Erodier-Maschine im «Stand-by» steht, also nicht erodieren soll. Demgemäss steht das Taktsignal S des Taktgebers 5 auf logisch «0». Dies hat zur Folge, dass wegen dessen Invertierung im Inverter 410 die Ausgangssignale a' und b' der ODER-Glieder 416 und 417 und damit die Ausgangssignale a und b der ODER-Glieder 418 und 419 dauernd auf logisch «1» stehen. Bereits daraus ergibt sich, dass die Funkenstrecke 3 ohne Stromimpulse bleibt. Die Signale M und U werden vom Impulssignal P abgeleitet, und zwar über die monostabile Kippstufe 47 (Signal M) und das UND-Glied 411 (Signal U).

Bei dem in Fig. 4a angenommenen Fall ist das Signal A'' spiegelsymmetrisch zum Signal B''. Das Signal A' stimmt mit dem Signal A und a'' überein. Entsprechendes gilt für die Beziehung zwischen den Signalen B, B' und b''. Auch die Signale a und a' sowie b und b' stimmen miteinander überein.

In der Fig. 4b ist nun angenommen, dass die Erodier-Maschine in Betrieb gesetzt wird, das Taktsignal S also auf logisch «1» gesetzt wird. Dies soll bei dem Fig. 4b angenommenen Fall innerhalb eines Zeitfensters geschehen, in welchem das Signal U ebenfalls auf logisch «1» steht. Das Signal U entspricht taktmässig weitgehend dem Impulssignal P des Oszillators 41, jedoch reduziert um die einstellbare Vorlaufzeit für die Überlappung der Impulse, die gleich der Zeitspanne ist, in welcher das Ausgangssignal M in der monostabilen Baustufe 47 auf logisch «0» steht. Aus Fig. 4b ergibt sich, dass im Zeitpunkt des Setzens des Taktsignals S auf logisch «1» bei U = «1», das Ausgangssignal a des ODER-Gliedes 419 unmittelbar von logisch «1» auf logisch «0» wechselt. Dies hat zur Folge, dass im dargestellten Beispiel ein Teilstrom $I_A$ in der Funkenstrecke 3 induziert wird, wiederum mit der durch den verwendeten Leistungsschaltkreis vorgegebenen Verzögerung. Die weitere Schaltsignalsequenz verläuft im — anhand von Fig. 4a — bereits beschriebenen Rhythmus solange das Taktsignal S ansteht. Demgemäss gelten auch dann die anhand von Fig. 4a erläuterten Beziehungen zwischen den Schaltsignalen untereinander, jedoch mit dem Unterschied, dass a synchron zu A und b synchron zu B variiert.

In Fig. 4c ist — im Vergleich zur Fig. 4b — die alternative Möglichkeit betrachtet, dass das Signal S auf logisch «1» gesetzt wird, wenn das Signal U gerade bei logisch «0» steht. In diesem Fall wird durch die Steuerschaltung 4, genauer wegen des Flip-Flops 44, das Ausgangssignal B des UND-Gliedes 414 unmittelbar auf logisch «0» gesetzt. Auch das Ausgangssignal des Flip-Flops 46 wird unmittelbar auf «0» gesetzt mit der Folge, dass auch das Ausgangssignal b des ODER-Gliedes 418 auf logisch «0» gesetzt wird. Dies hat zur Folge, dass durch den Transformator 23B der Teilstrom $I_B$ in der Funkenstrecke 3 ausgelöst wird. Wegen der Ansteuerung des ODER-Gliedes 419 mit dem Signal des Q-Ausganges des Flip-Flops 45 bleibt das Signal a auf «1». Im Anschluss daran nehmen die einzelnen Signale wieder den in Fig. 4b dargestellten Rhythmus an.

In Fig. 4d ist noch die Relation zwischen den Signalen B'', R und $\overline{R}$ in Abhängigkeit vom Imspulssignal P sowie den Signalen M und U dargestellt. Bemerkenswert ist hierbei, dass das Signal R, demgemäss auch das Signal $\overline{R}$, gegenüber dem Signal B'' auf der Zeitachse um eine Konstante verschoben ist, die gleich der Dauer des Signals M auf logisch «0» ist.

Die anhand der Fig. 3 und 4a bis 4d beschriebene Steuerschaltung 4 kann auch in mehrfacher Ausführung parallel geschaltet sein, wodurch sich beliebige Impulsformen mit beliebiger Amplitude erzeugen lassen. Dies wird durch geeignete Wahl der Überlappung der von den einzelnen Steuerschaltungen gelieferten Impulse sowie durch geeignete Wahl der Pausenabstände zwischen den Impulsen erreicht. Der Taktgeber 5 übernimmt dabei die synchrone Steuerung aller beteiligten Steuerschaltungen 4. Die parallelen Zweige der Steuerschaltungen 4 lassen sich auch rein additiv zur Stromüberhöhung zusammenschalten, um besonders starke Stromimpulse zu erzeugen.

## Patentansprüche

1. a) Schaltungsanordnung zur Erzeugung von Erodierimpulsen an einer Funkenerosionsanlage aus einer Geichstromquelle (1) ohne zugeschaltete Ballastwiderstände mit

b) mindestens zwei zur Funkenstrecke (3) und zueinander parallel angeordneten Stromkreisen (2A, B), wobei

c) jeder Stromkreis (2A, B) in Reihe aufweist:

c.1) einen mit der einen Klemme der Gleichstromquelle (1) verbundenen ersten Schalter (21A, B)

c.2) eine Primärwicklung eines Transformators (23A, B) und

c.3) einen mit der anderen Klemme der Gleichstromquelle (1) ohne Zwischenschaltung eines diskreten Energiespeichers verbundenen zweiten Schalter (22A, B) und

d) einer zur Erzeugung und einstellbaren und/oder steuerbaren zeitlichen Zuordnung von Steuersignalen (A, a, B, b) ausgelegten Steuereinrichtung (4), deren Steuerausgänge mit den ersten und zweiten Schaltern (21A, B, 22A, B) verbunden sind, dadurch gekennzeichnet, dass

e) auch der erste Schalter (21A, B) ohne Zwischenschaltung eines diskreten Energiespeichers mit der Primärwicklung verbunden ist.

2. Schaltungsanordnung nach Anspruch 1, dadurch gekennzeichnet, dass jeder Stromkreis so geschaltet ist, dass ein Stromimpuls nur dann zur Funkenstrecke (3) durchgelassen wird, wenn die ersten und zweiten Schalter (21A, B, 22A, B) gleichzeitig offen sind.

3. Schaltungsanordnung nach Anspruch 1 oder 2, dadurch gekennzeichnet, dass in jedem Stromkreis (2A, B) jeder Primärwicklung eine eigene Sekundärwicklung zugeordnet ist.

4. Schaltungsanordnung nach Anspruch 2 und 3, dadurch gekennzeichnet, dass der Sekundärwicklung eine Diode (27A, B) nachgeschaltet ist.

5. Schaltungsanordnung nach einem der vorstehenden Ansprüche, dadurch gekennzeichnet, dass die Steuereinrichtung (4) einen mit dem Taktausgang eines externen Taktgebers (5) verbundenen Steuereingang und zusätzlich einen Oszillator (41) zur Erzeugung eines hochfrequenten vom Taktgeber (5) unabhängigen zusätzlichen Taktsignalen (P) aufweist.

## Claims

1. a) Circuit arrangement, for producing eroding pulses in a spark erosion system from a direct voltage source (1) without connected ballast resistors, having:

b) at least two circuits (2A, B) arranged in parallel with one another and with the spark gap (3), wherein

c) each circuit (2A, B) has in series:

c.1) a first switch (21A, B) linked to one terminal of the direct voltage source (1);

c.2) a primary winding of a transformer (23A, B); and

c.3) a second switch (22A, B) coupled to the other terminal of the direct voltage source (1) without interconnection of a discrete energy store, and

d) a controlling system (4) arranged for the supply and adjustable and/or controllable time allocation of control signals (A, a, B, b), the control outputs of the control system being coupled to the first and second switches (21A, B, 22A, B) characterised in that

e) the first switch (21A, B) is also linked to the primary winding without interconnection of a discrete energy store.

2. Circuit arrangement according to claim 1, characterised in that each electric circuit is connected in such a way that a current pulse is only let through to the spark gap when the first and second switches (21A, B, 22A, B) are simultaneously open.

3. Circuit arrangement according to claim 1 or 2, characterised in that in each electric circuit (2A, B) each primary winding has associated therewith its own secondary winding.

4. Circuit arrangement according to claim 2 and 3, characterised in that a diode (27A, B) is arranged downstream of the secondary winding.

5. Circuit arrangement according to one of the preceding claims, characterised in that the control system (4) has: a control input linked to the clock pulse output of an external clock pulse generator (5); and an oscillator (41) for producing an additional high frequency clock signal (P) independent of the clock pulse generator (5).

**Revendications**

1. a) Montage pour produire des impulsions d'érosion dans une installation d'étincelage à partir d'une source de courant continu (1) sans aucune résistance de charge branchée en supplément, et comportant:

b) au moins deux circuits (2A, B) qui sont montés en parallèle l'un avec l'autre et en parallèle avec l'éclateur à intincelles (3),

c) chaque circuit (2A, B) comportant en série:

c.1) un premier interrupteur (21A, B) relié à une borne de la source de courant continu (1),

c.2) un enroulement primaire d'un transformateur (23A, B), et

c.3) un second interrupteur (22A, B) relié à l'autre borne de la source de courant continu (1) sans le montage intercalaire d'un accumulateur d'énergie discret, et

d) un dispositif de commande (4), qui est conçu de manière à réaliser une association temporelle réglable et/ou commandable de signaux de commande (A, a, B, b) et dont les sorties de commande sont reliées aux premier et second interrupteurs (21A, B, 22A, B), caractérisé en ce que

e) le premier interrupteur (21A, B) est également relié à l'enroulement primaire sans le montage intercalaire d'un accumulateur d'énergie discret.

2. Montage selon la revendication 1, caractérisé en ce que chaque circuit est branché de telle sorte qu'une impulsion de courant n'est transmise à l'éclateur à étincelles (3) que lorsque les premier et second interrupteurs (21A, B, 22A, B) sont simultanément ouverts.

3. Montage selon la revendication 1 ou 2, caractérisé en ce que, dans chaque circuit (2A, B), un enroulement secondaire particulier est associé à chaque enroulement primaire.

4. Montage selon les revendications 2 et 3, caractérisé en ce qu'une diode (27A, B) est branchée en série de l'enroulement secondaire.

5. Montage selon l'une des revendications précédentes, caractérisé en ce que le dispositif de commande (4) comporte une entrée de commande, qui est reliée à une sortie de cadence d'un générateur externe de cadence (57, et en outre un oscillateur (41) servant à produire un signal supplémentaire de cadence à haute fréquence (P), indépendant du générateur de cadence (5).

FIG. 1

0 160 995

0 160 995

FIG. 2

S = "0"

FIG. 4a

9

0 160 995

4

"1" "1"

48
$\overline{P}$
J    K
42   CK   $\overline{Q}$
     Q    B"

41
OSC.   P

47   MONO ST   M

413   A"   A'
412   B"   B'
411   U   49   $\overline{U}$
"1"  44   D   cl   Ck   $\overline{Q}$

415   A
414   B
$b''$   $a''$

5
OSC.   S

410   S   $\overline{S}$

417   $a'$
416

419   a

"1"  cl   43
CK   Q   R
D    $\overline{Q}$

45   CL Q   CK   D

$b'$

418   b

$\overline{R}$   46   CL Q   CK   D

Wahrheitstabelle
für 43 bis 46

| CL | D | CK | Q | $\overline{Q}$ |
|----|---|----|----|----|
| L | X | X | L | H |
| H | H | ↑ | H | L |
| H | L | ↑ | L | H |
| H | X | L | $Q_0$ | $\overline{Q}_0$ |

FIG. 3

FIG. 4b

S → "1" WENN U = "1"

FIG. 4c

S → "1" WENN U = "0"

# FIG. 4 d